(19) Europäisches Patentamt
European Patent Office
Office européen des brevets

(11) **EP 4 787 241 A1**

(12) **EUROPEAN PATENT APPLICATION**

(43) Date of publication:
**05.08.2026 Bulletin 2026/32**

(21) Application number: **25155253.5**

(22) Date of filing: **31.01.2025**

(51) International Patent Classification (IPC):
**G06N 3/063** (2023.01)     **G06N 3/086** (2023.01)
**G06N 3/0464** (2023.01)     **G06N 3/0985** (2023.01)

(52) Cooperative Patent Classification (CPC):
**G06N 3/086; G06N 3/0464; G06N 3/063;
G06N 3/0985**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Rai, Shubham
  71263 Weil Der Stadt (DE)**
• **Rapp, Martin
  73728 Esslingen Am Neckar (DE)**

Remarks:
Amended claims in accordance with Rule 137(2)
EPC.

(54) **SYSTEM AND METHOD FOR PROVIDING A HARDWARE-SPECIFIC MACHINE LEARNING MODEL ARCHITECTURE**

(57)     A method for providing a hardware-architecture-specific machine learning model architecture 300 is provided. One or more architectural parameters 321-341 of a machine learning model architecture are obtained, the model architecture comprising model architecture elements 310-360. An execution of the model architecture is simulated on a given target hardware, from which one or more metrics 322-342 describing a performance of the elements are obtained. For each architectural parameter, model architecture elements are identified which are impacted by adjusting the respective architectural parameter. A mutation score 323-343 is determined for the architectural parameter from the one or more metrics, the mutation score indicating an impact of the one or more model architecture elements associated with the respective architectural parameter on an overall performance of the model architecture on the given target hardware. The mutation scores are used in a genetic neural architecture search algorithm, indicating probabilities that architectural parameters are adjusted.

Fig. 3

## Description

### Field of the invention

The presently disclosed subject matter relates to a method for providing a hardware-specific machine learning model architecture. The presently disclosed subject matter further relates to a system comprising: one or more processors; and one or more storage devices storing instructions that, when executed by the one or more processors, cause the one or more processors to perform steps for the method. The presently disclosed subject matter further relates to a transitory or non-transitory computer-readable medium comprising data representing instructions, which when executed by a processor system, cause the processor system to perform one or more steps of the method.

### Background of the invention

Embedded devices, which are also known as dedicated, or single-purpose devices, generally are part of a larger computing system, in which they serve a specific purpose, such as the execution of one or more particular application tasks within the applications of the larger system. Embedded devices may be incorporated in the larger system, or may be an independent, stand-alone device within the system. Examples of embedded devices include devices integrated in dishwashers, microwaves, routers, smartphones, autonomous or semi-autonomous vehicles, drones and aeroplanes.

As embedded devices are configured to perform one or more particular application tasks, embedded devices typically consume a limited amount of power, and/or the hardware on embedded devices is typically small. In the evolution the usage of artificial intelligence (AI) brings along, it is therefore of paramount importance to ensure that neural networks are efficiently executed on the embedded device, e.g., taking an energy or latency budget into account. Therefore, the model architecture of a neural network, also called a neural architecture, may be optimized, e.g., for efficient execution on the hardware of an embedded device. This may be achieved in an automated manner via neural architecture search (NAS), which is known per se.

Hardware-aware NAS, which is a type of NAS, is generally initialized with a first model, a baseline model. Starting from this model, adaptations to the model architecture are generated which increase the hardware efficiency, e.g., in terms of latency, energy, and/or throughput, while maintaining a high task performance, e.g., in terms of accuracy, precision, and/or loss. The architecture search typically requires repeatedly evaluating certain candidate architectures with respect to task performance and hardware efficiency, in order to iteratively identify an optimized architecture.

Determining the hardware efficiency and/or the performance of candidate architectures generally includes simulations and/or computations which are computationally expensive. Therefore, it is of utmost importance that the NAS is sample-efficient, so that as few candidate architectures as possible need to be evaluated. There exist a number of different implementations of NAS, which aim to achieve sample efficiency. For example, in the paper 'FlexiBO: A Decoupled Cost-Aware Multi-Objective Optimization Approach for Deep Neural Networks' by Iqbal et al., which paper may be retrieved from arxiv.org/abs/2001.06588, Bayesian optimization is used, where different objectives may be evaluated independently. In the paper 'Efficient Multi-objective Neural Architecture Search via Lamarckian Evolution' by Elsken et al., which paper may be retrieved from arxiv.org/abs/1804.09081, an evolutionary architecture search is used, wherein individual parts of the baseline model architecture are adjusted following a constant mutation probability, in order to create new candidate architectures. In the paper 'Once-for-All: Train One Network and Specialize it for Efficient Deployment', which paper may be retrieved from arxiv.org/abs/1908.09791, small neural networks are trained as surrogate models to predict a hardware latency of a candidate network without executing a deployment optimization step.

A disadvantage of the existing methods for hardware-aware NAS, is that they treat the deployment stack, or neural network compiler, where the hardware efficiency and/or performance of candidate architectures may be determined, as a black box, or try to circumvent this process using surrogate models, which suffer from a low precision and thus a low task performance. The existing methods only consider computing objective metrics, such as latency and/or energy consumption, which are provided by a given hardware, which only gives generic, limited information on the interplay between given hardware and the model architecture, and do not take more specific information on hardware efficiency of a candidate architecture into account.

### Summary of the Invention

It would be desirable to improve the sample efficiency of hardware-aware neural architecture search using more specific and/or detailed information on the hardware efficiency of candidate model architectures, while maintaining a high task performance.

In accordance with a first aspect of the invention, as defined by claim 1, a method is provided for providing a hardware-specific machine learning model. In accordance with a further aspect of the invention, a system is provided as defined by claim 14. In accordance with a further aspect of the invention, a computer-readable medium is provided as defined by claim 15.

The above measures may involve obtaining one or more architectural parameters of a machine learning model architecture. The machine learning model architecture may comprise a neural network architecture, such as a convolutional neural network architecture. The machine learning model architecture may comprise one or more model architecture elements. The one or more model architecture elements may comprise one or more layers, and/or sets of one or more layers. The one or more layers may comprise network layers, such as convolutional layers, and/or activation layers. The one or more model architecture elements may comprise connections between one or more model architecture elements, such as connections between layers. The connections may comprise residual connections between model architecture elements, through which one or more intermediate architectural elements may be skipped. The one or more model architecture elements may comprise one or more maps, such as an activation map, a feature map, and/or a convolutional feature map. The activation map may be a ReLU activation map. The map may map an input into a feature space, such as a two-dimensional or multidimensional array or grid of numbers. The mapping may result from an application of a convolutional filter or kernel. The one or more model architecture elements may comprise one or more convolutional filters, or kernels. The one or more convolutional filters or kernels may be part of a convolutional neural network. The one or more architectural parameters may comprise one or more architectural parameters of model architecture elements in the one or more model architecture elements. For example, the one or more architectural parameters may comprise a size and/or a number of convolutional filters or kernels of one or more convolutional layers, e.g., of a convolutional neural network. The convolutional neural network may be comprised in or constitute the machine learning model. The one or more architectural parameters may comprise one or more network weights associated with model architecture elements of the machine learning model architecture. The one or more network weights may be weights associated with one or more network layers, and/or weights associated with connections between model architecture elements. The one or more architectural parameters may comprise one or more of a size, a dimension of an input space and a dimension of a feature space of a map in the machine learning model architecture. The map may be an activation map, a feature map, and/or a convolutional feature map. The map may map the input space to the feature space. The map may map an input from the input space, the input having the dimension of the input space, into a feature in the feature space, having the dimension of the feature space. The mapped feature may be, e.g., an array or grid having the dimension of the feature space, filled with numbers. The map may result from an application of a convolutional filter or kernel.

The above measures may further involve simulating an execution of the machine learning model architecture on a given target hardware. The given target hardware may comprise at least part of dedicated hardware, e.g., dedicated hardware for a specific application, such as dedicated hardware on an embedded device. The simulation may be carried out and/or implemented by a compiler. The compiler may be a neural network compiler, such as a Tensor Virtual Machine (TVM) or a Multi-Level Intermediate Representation (MLIR) compiler.

The above measures may further involve obtaining from the simulating one or more metrics describing a performance of the one or more model architecture elements. The performance of the one or more model architecture elements may be a performance on the given target hardware. The one or more metrics may describe a performance of individual model architecture elements out of the one or more model architecture elements. For example, the one or more metrics may comprise a metric based on values describing an occupation of the Static Random Access Memory (SRAM) by individual model architecture elements of the machine learning model architecture. The one or more metrics may comprise a metric based on values describing a frequency of offloading an individual architecture element to a general-purpose compute. For example, the one or more metrics may comprise a metric based on values describing one or more of a Dynamic Random Access Memory (DRAM) read access and/or a DRAM write access. For example, the one or more model architecture elements may comprise a residual connection, and the one or more metrics may comprise a metric based on values describing one or more of a number of layers the residual connection skips and a size of a memory occupied by the residual connection. The one or more metrics may comprise a metric based on values describing a frequency of DRAM access.

The above measures may further involve, for each architectural parameter of the one or more architectural parameters, identifying one or more model architecture elements of the machine learning model architecture impacted by adjusting the respective architectural parameter. For example, the architectural parameter may comprise a size and/or a number of kernels of a convolutional layer in the machine learning model architecture. Adjusting the respective architectural parameter may comprise reducing or increasing the size and/or the number of kernels of the convolutional layer in the machine learning model architecture. For example, the architectural parameter may comprise one or more network weights of the machine learning model architecture. Adjusting the respective architectural parameter may comprise adjusting one or more of the one or more network weights; for example, reducing, or increasing one or more of the network weights. The architectural parameter may comprise one or more of a size, a dimension of an input space and a dimension of a feature space of a map in the machine learning model architecture. Adjusting the respective architectural parameter may comprise changing the size, the dimension of the input space and/or the dimension of the feature space of the map. For example, changing the size, the dimension of the input space and/or the dimension of the feature space of the map may comprise reducing or increasing the size, the dimension of the input space and/or the dimension of the feature space of the map.

The above measures may further involve, for each architectural parameter of the one or more architectural parameters, determining a mutation score for the architectural parameter from the one or more metrics for the one or more identified model architecture elements. The mutation score may indicate an impact of the one or more model architecture elements associated with the respective architectural parameter on an overall performance of the machine learning model architecture on the given target hardware. For a respective architectural parameter, a same metric describing a performance of each identified model architecture element may be used for all of the identified model architecture elements impacted by adjusting the respective architectural parameter. The mutation score for the respective architectural parameter may then be determined on the basis of a same metric for the one or more identified model architecture elements. The mutation score may indicate a probability that the corresponding architectural parameter is adjusted.

The above measures may further involve using the mutation scores for the one or more architectural parameters in a genetic neural architecture search algorithm. The mutation scores may be used as input for the genetic neural architecture search algorithm. An input of the genetic neural architecture search algorithm may comprise the machine learning model architecture. An output of the genetic neural architecture search algorithm may comprise an adjusted machine learning model architecture. For example, the genetic neural architecture search algorithm may comprise adjusting the machine learning model architecture. The adjusted machine learning model architecture may be adjusted based on the mutation scores. Individual model architecture elements in the machine learning model architecture may be adjusted based on the mutation scores. Individual model architecture elements in the machine learning model architecture may be adjusted with probabilities indicated by the mutation scores. Individual model architecture elements in the machine learning model architecture may be adjusted based on the adjusting of architecture parameters. Architecture parameters may be adjusted with probabilities indicated by the mutation scores. Adjusting the machine learning model architecture may comprise, for each architectural parameter of the one or more architectural parameters, adjusting the respective architectural parameter with a mutation probability based on the mutation score for the respective architectural parameter.

The above measures may further involve providing the adjusted machine learning model architecture as output. The adjusted machine learning model architecture may be provided as output for deployment on the given target hardware. The given target hardware may be hardware of an embedded device. The adjusted machine learning model architecture may be provided as output for deployment on an embedded device. The adjusted machine learning model architecture may be hardware-efficient, e.g., optimized on the given target hardware. The adjusted machine learning model architecture may be optimized with respect to task efficiency, for example on an application task, e.g., an application task of the embedded device. The adjusted machine learning model may be Pareto-optimal with respect to task efficiency and hardware efficiency. The resulting provided adjusted machine learning model may be considered a hardware-specific machine learning model.

The above measures may be based on the insight that state-of-the-art hardware-aware neural architecture search flows treat deployment simulation, computation and/or optimization of candidate model architectures as a black box, or even try to circumvent this process, missing out on potentially important information which may be obtained from the interplay and/or synergy between given target hardware and candidate model architectures. The hardware-aware NAS strategies from the prior art only consider computing objective metrics, such as latency and/or energy consumption, which are provided by a given hardware, which only gives generic, limited information on the interplay, and do not take more specific information on hardware efficiency of a candidate architecture into account. The above measures allow additional information that may be created during a deployment simulation to be leveraged in a genetic neural architecture search algorithm. The additional information is comprised in the determined mutation scores for the obtained architectural parameters associated to model architecture elements in the machine learning model architecture. The deployment simulation simulated executing the machine learning model architecture on the given target hardware. The additional information formed by the mutation scores is leveraged in the genetic neural architecture search algorithm, as on the basis of the mutation scores the machine learning model architecture may be adjusted during the genetic neural architecture search algorithm. By leveraging the additional information on deployment of the machine learning model architecture on the target hardware, such as hardware efficiency, in the neural architecture search algorithm and adjusting the machine learning model architecture accordingly, fewer samples of candidate model architecture may be needed to arrive at an candidate model architecture which is optimized for deployment on the target hardware. Thereby, the sample efficiency of a hardware-aware neural architecture search is improved, with the use of additional, detailed information on hardware efficiency of candidate model architectures.

In a further aspect of the invention, a system is provided, which comprises one or more processors; and one or more storage devices storing instructions that, when executed by the one or more processors, cause the one or more processors to perform operations for a method according to an embodiment as discussed above. The system may comprise an embedded system, and/or one or more embedded devices.

In a further aspect of the invention, a transitory or non-transitory computer-readable medium is provided, which comprises data representing instructions, which when executed by a processor system, cause the processor system to perform one or more steps of the method according to an embodiment as discussed above.

It will be appreciated by those skilled in the art that two or more of the above-mentioned embodiments, implementations, and/or optional aspects of the invention may be combined in any way deemed useful.

Modifications and variations of any device, system, network, computer-implemented method and/or any computer readable medium, which correspond to the described modifications and variations of another of such entities, can be carried out by a person skilled in the art on the basis of the present description.

**Brief description of the drawings**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

**Fig. 1** shows an example of an embedded system, comprising embedded devices;

**Fig. 2** shows an example of a state-of-the-art hardware-aware neural architecture search flow;

**Fig.3** shows an example of a machine learning model architecture according to an embodiment;

**Fig. 4** shows an example of a hardware-aware neural architecture search flow according to an embodiment;

**Fig. 5** shows an example of a method for providing a hardware-specific machine learning model architecture according to an embodiment;

**Fig. 6a** shows a computer-readable medium having a writable part comprising a computer program according to an embodiment; and

**Fig. 6b** shows a representation of a processor system according to an embodiment.

**Reference signs list**

The following list of references and abbreviations is provided for facilitating the interpretation of the drawings and shall not be construed as limiting the claims.

| | |
|---|---|
| 100 | embedded system |
| 110, 110' | embedded device |
| 111, 111' | processor |
| 112, 112' | memory |
| 113, 113' | communication interface |
| 200, 400 | hardware-aware neural architecture search flow |
| 201 | machine learning model architecture |
| 210, 410 | network search space |
| 220 | neural architecture search algorithm |
| 230, 430 | deployment optimization |
| 240, 440 | evaluation of task performance |
| 250, 450 | evaluation of hardware efficiency |
| 271, 471 | accuracy output of evaluation of task performance, such as |
| 281, 481 | latency output of evaluation of hardware efficiency, such as |
| 300 | machine learning model architecture |
| 300' | adjusted machine learning model architecture |
| 310-360 | model architecture element |
| 321, 331, 341 | architectural parameter |
| 322, 332, 342 | metric describing a performance of a model architecture element |
| 323, 333, 343 | mutation score for an architectural parameter |

(continued)

| 324, 334, 344 | mutation probability for an architectural parameter |
|---|---|
| 420 | genetic neural architecture search algorithm |
| 460 | leveraging additional information on hardware efficiency per individual architectural element |
| 500 | method for providing a hardware-specific machine learning model architecture |
| 510 | obtaining one or more architectural parameters |
| 520 | simulating an execution of the machine learning model architecture on a given target hardware |
| 531 | identifying one or more model architecture elements |
| 532 | determining a mutation score |
| 540 | using the mutation scores in a genetic neural architecture search algorithm |
| 550 | providing the adjusted machine learning model architecture |
| 560 | performing a neural architecture search |
| 570 | using the adjusted machine learning model architecture to initialize a further neural architecture search |
| 1000 | optical storage device |
| 1001 | memory card |
| 1020, 1021 | stored data |
| 1140 | processor system |
| 1110 | subsystems or components |
| 1120 | processing subsystem |
| 1122 | memory |
| 1124 | dedicated integrated circuit |
| 1126 | communication interface |
| 1130 | interconnect |

**Detailed description of embodiments**

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

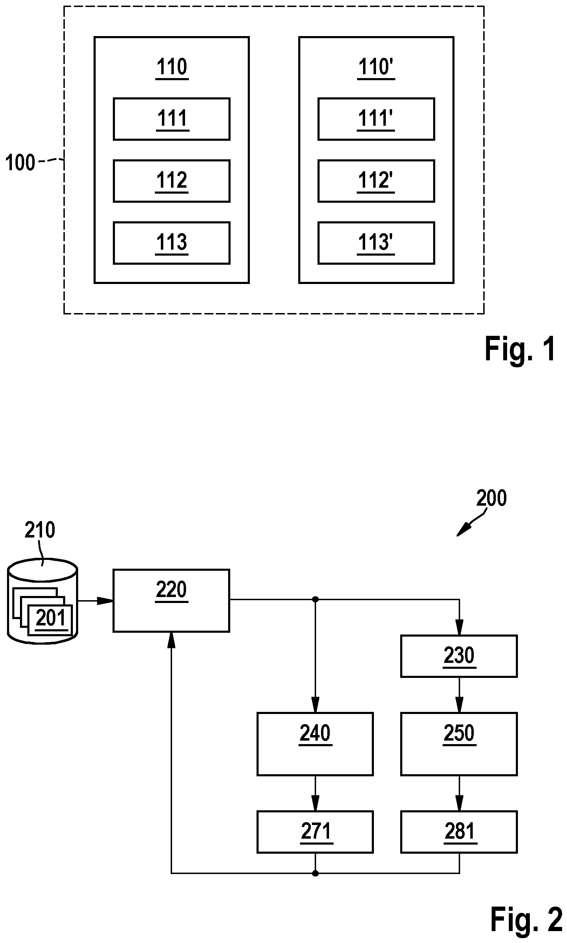

**Fig. 1** shows an example of an embedded system 100. The embedded system may comprise one or more embedded devices 110, 110'. Each of the one or more embedded devices 110, 110' may comprise a processor 111, 111', a memory 112, 112', and a communication interface 113, 113'. Memory 112, 122' may store instructions that, when executed by processor system 111, 111', cause processor system 111, 111' to perform operations for executing a method 500. Embedded device 110 may comprise communication interface 113, e.g., to communicate with, e.g., embedded device 110' in embedded system 100. Embedded device 110' may comprise communication interface 113', e.g., to communicate with, e.g., embedded device 110 in embedded system 100 Communication interface 113, 113' may be selected from various alternatives. For example, the interface 113, 113' may be a network interface to a local or wide area network, e.g., the Internet, a storage interface to an internal or external data storage, an application interface (API), etc. Memory 112, 112' may comprise a storage, e.g., electronic storage, magnetic storage, etc. The storage may comprise local storage, e.g., a local hard drive or electronic memory. The storage may comprise non-local storage, e.g., cloud storage. In the latter case, the storage may comprise a storage interface to the non-local storage. The storage may comprise multiple discrete sub-storages together making up memory 112, 112' The storage may comprise non-transitory storage. For example, the storage may store data in the presence of power such as a volatile memory device, e.g., a Random Access Memory (RAM). For example, memory 112, 112' may store data in the presence of power as well as outside the presence of power such as a non-volatile memory device, e.g., Flash memory. Memory 112, 112' may comprise a non-volatile non-writable part, e.g., ROM, e.g., storing part of the software. The execution of embedded device 110, 110' may be implemented in processor system 111, 111'. Embedded device 110, 110' may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Embedded device 110, 110' may comprise multiple processors. A processor circuit may be implemented in a distributed fashion, e.g., as multiple sub-processor circuits. For example, embedded device 110, 110' may use cloud computing. Embedded device 110, 110' may comprise a microprocessor which executes appropriate software stored at the device; for example, that software may have been downloaded and/or stored in a corresponding memory, e.g., a volatile memory such as RAM or a non-volatile memory such as Flash. Instead of using software to implement a function, embedded device 110, 110' may, in whole or in part, be implemented in programmable logic, e.g., as field-programmable gate array (FPGA). The device may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, embedded device 110, 110' may comprise circuits, e.g., for cryptographic processing, and/or arithmetic processing. In hybrid embodiments, functional units are implemented partially in hardware, e.g., as coprocessors, and partially in software stored and executed on the device.

Embedded devices 110, 110' may be part of a larger computing system, such as embedded system 100. Embedded devices 110, 110' may be embedded, comprised, incorporated and/or integrated in embedded system 100. Embedded devices 110, 110' may be independent, stand-alone devices within embedded system 100. Embedded devices 110, 110' may serve a specific purpose, such as the execution of one or more particular application tasks within the applications of embedded system 100. Embedded devices 110, 110' may be configured to perform one or more particular application tasks, such as one or more application tasks of embedded system 100. To this end, in general embedded devices 110, 110' comprise dedicated software, e.g., in the form of an operating system, comprising programming instructions for configuring embedded devices 110, 110'. As embedded devices 110, 110' may be configured to perform a limited amount of application tasks, embedded devices 110, 110' typically consume a limited amount of power. Additionally, the hardware on embedded devices 110, 110' is generally small compared to other types of devices.

Examples of systems comprising embedded devices 110, 110' for particular application tasks may comprise the majority of everyday electronic equipment: household appliances, such as dishwashers, microwaves; bank ATM machines; edge devices such as data routers, network switches, smartphones, etc. Vehicles such as drones, aeroplanes and spaceships, may comprise a large number of embedded devices. In the modern digital economy, embedded devices are ubiquitous in almost all electronic equipment.

As embedded devices 110, 110' and embedded systems 100 may have limited computing resources and strict power requirements, they may form resource-constrained devices and systems, and may only be capable of handling the specific application task or range of application tasks for which embedded devices 110, 110' are designed. For an optimal usage of machine learning models on embedded devices 110, 110', it is therefore of key importance to ensure that neural networks are efficiently executed on embedded device 110, 110', in particular on the hardware of embedded device 110, 110'; e.g., within a certain energy and/or a latency budget. Therefore, a machine learning model architecture may be optimized, for efficient execution on embedded device 110, 110'.

**Fig. 2** shows an example of a state-of-the-art hardware-aware neural architecture search (NAS) flow 200. Using a hardware-aware NAS flow 200, machine learning model architectures 201 may be optimized for efficient execution on the hardware of an embedded device 110, 110' in an automated manner. NAS flows 200 are known per se, and a state-of-the-art example flow 200 is pictured in Figure 2. A network search space 210 may comprise a large number of potential candidate machine learning model architectures 201; too large to explore manually. NAS flows 200 enable an automated model architecture search. In general, NAS flow 200 may be initialized from a model architecture 201 serving as a baseline model architecture. NAS flow 200 may search for adaptations to baseline model architecture 201 in a NAS algorithm 220. NAS algorithm 220 may comprise, e.g., a genetic NAS algorithm 220. In NAS algorithm 220, candidate model architectures 201 may be selected. A selected candidate model architecture 201 may comprise an adaptation of baseline model architecture 201. The adaptations to baseline model architecture 201 may comprise adjustments of individual model architecture elements of baseline model architecture 201. The adaptations to baseline model architecture 201 may increase the hardware efficiency of the model architecture. The adaptations to baseline model architecture 201 may increase the hardware efficiency of the model architecture in terms of, e.g., latency, energy, and/or throughput. The adaptations to baseline model architecture 201 may increase the hardware efficiency of the model architecture while maintaining a desirable task performance. A maintained desirable task performance may comprise, e.g., a high accuracy, a high precision, and/or a low loss. Adjustments of individual model architecture elements may comprise, for example, adjustments of a number of channels in convolutional layers in the model architecture, adjustments of a number of layers in a block of model architecture elements in the model architecture, and/or adjustments of a size of an embedding in the model architecture.

Hardware-aware NAS flow 200 may comprise an optimization loop. In the optimization loop, candidate model architectures 201 may repeatedly be evaluated with respect to, e.g., a task performance and/or a hardware efficiency. In the iterative process, Pareto-optimal model architectures may be identified, for which a Pareto-optimal trade-off between the task performance and the hardware efficiency may be achieved. In each iteration of the optimization loop, NAS algorithm 220 may create and/or select one or several candidate model architectures 201. Candidate model architectures 220 may be evaluated to identify a task performance and/or a hardware efficiency of candidate model architecture 220. In a deployment optimization 230, also called a deployment stack and/or a neural network compiler, one or more hardware metrics 281, such as latency and/or energy consumption as provided by the given hardware, may be computed in an evaluation 250 of hardware efficiency. Hardware metrics 281 may be fed back into NAS algorithm 220, and new candidate model architectures 220 may be created in order to iteratively approach a Pareto optimum. The optimization loop may further comprise a task performance evaluation 240. In the evaluation 240 of task performance, an output of the machine learning model associated with the candidate model architecture 201 may be computed on a set of benchmark inputs, such as test data. From the computations, a task performance metric 271, such as an accuracy, a precision, and/or an error, may be determined.

Determining a hardware efficiency of a candidate model architecture 201 may comprise deploying and/or simulating an execution of the candidate model architecture 201 for the target device. Simulating the execution may be carried out by a neural network compiler. The deploying and/or simulating may comprise one or more topological optimizations, such as operator fusion, operator scheduling, tiling and/or efficient memory mapping. As evaluating a single candidate network for a task performance and/or a hardware efficiency may be computationally expensive, sample efficiency is an important aspect of a neural architecture search flow 200. A NAS flow 200 may be sample efficient if a required number of evaluations of candidate model architectures 201 may be kept low before an optimal model architecture is reached.

As discussed above, in the prior art, several variants of NAS flows exist. However, all these works treat deployment optimization 230 as a black box: NAS algorithm 220 may only take objective metrics, such as latency, as an input. With this, significant, more detailed information about how the hardware may impact different, individual elements in candidate model architectures 201 during deployment optimization 230 may be disregarded. Deployment steps 230-250 and NAS 220 may be considered rather agnostic, and applied sequentially with respect to each other. This way, deployment strategies may be rather unaware of NAS strategies that may lead to missing out crucial optimization opportunities.

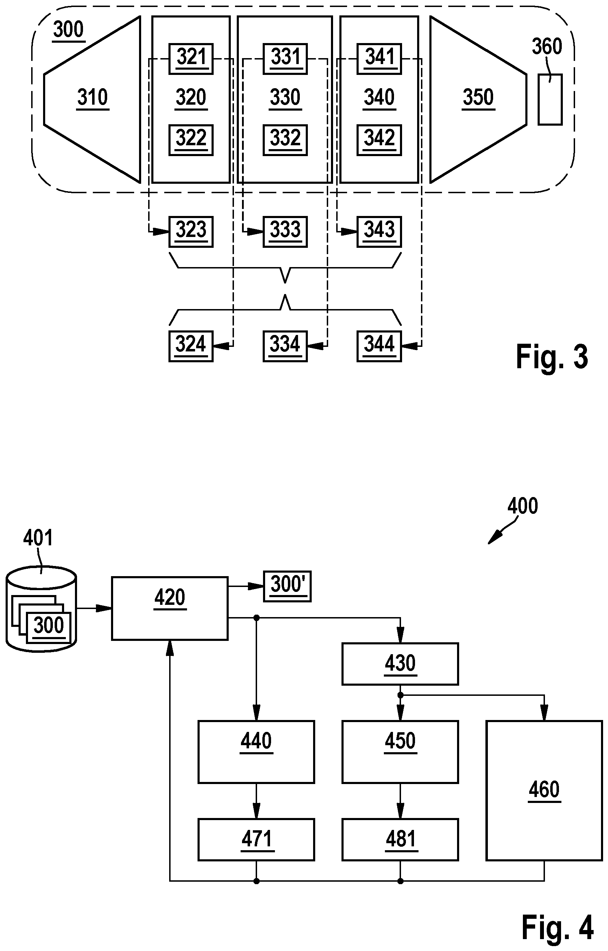

**Fig.3** shows an example of a machine learning model architecture 300 according to an embodiment. Machine learning model architecture 300 may comprise a neural network architecture 300, and/or the machine learning model associated with machine learning model architecture 300 may comprise a neural network. For example, machine learning model architecture 300 may comprise a convolutional neural network architecture 300, and/or the machine learning model associated with machine learning model architecture 300 may comprise a convolutional neural network.

Machine learning model architecture 300 may comprise one or more model architecture elements 310, 320, 330, 340, 350, 360. For example, one or more model architecture elements 310, 320, 330, 340, 350, 360 may comprise one or more layers 310, 320, 330, 340, 350, 360. One or more layers 310, 320, 330, 340, 350, 360 may comprise, for example, a convolutional layer 310, 330, 350, an activation layers 320, 340, and/or another type of network layer, such as a batch normalization layer. The one or more model architecture elements 310, 320, 330, 340, 350, 360 may comprise connections between one or more model architecture elements 310, 320, 330, 340, 350, 360, such as connections between layers 310, 320, 330, 340, 350, 360. The connections may comprise residual connections between model architecture elements 310, 320, 330, 340, 350, 360, through which one or more intermediate architectural elements may be skipped 310, 320, 330, 340, 350, 360. One or more model architecture elements 310, 320, 330, 340, 350, 360 may comprise one or more activation maps, such as a ReLU activation map. The one or more model architecture elements 310, 320, 330, 340, 350, 360 may comprise one or more maps, such as an activation map, a feature map, and/or a convolutional feature map. The activation map may be a ReLU activation map. The map may map an input into a feature space, such as a two-dimensional or multidimensional array or grid of numbers. The mapping may result from an application of a convolutional filter or kernel. The one or more model architecture elements 310, 320, 330, 340, 350, 360 may comprise one or more convolutional filters, or kernels. The one or more convolutional filters or kernels may be part of a convolutional neural network 300. The convolutional neural network 300 may be comprised in or constitute the machine learning model 300.

Machine learning model architecture 300 may comprise one or more architectural parameters 321, 331, 341. One or more architectural parameters may be of one or more model architecture elements 320, 330, 340 of the one or more architectural elements 310, 320, 330, 340, 350, 360. A model architecture element 310, 320, 330, 340, 350, 360 may be a convolutional layer 310, 330, 350 in the machine learning model architecture 300. An architectural parameter 321, 331, 341 may comprise a size and/or a number of kernels of a convolutional layer 310, 330, 350 in the machine learning model architecture 300. A model architecture element 310, 320, 330, 340, 350, 360 may be a network layer 310, 320, 330, 340, 350, 360, and/or a network connection connecting one or more network layers 310, 320, 330, 340, 350, 360. An architectural parameter 321, 331, 341 may comprises one or more network weights of model architecture elements 310, 320, 330, 340, 350, 360 of the machine learning model architecture 300. The one or more network weights may be weights of be a network layer 310, 320, 330, 340, 350, 360, and/or weights associated with connections between model architecture elements 310, 320, 330, 340, 350, 360, for example, a network connection connecting one or more network layers 310, 320, 330, 340, 350, 360. The one or more architectural parameters 321, 331, 341 may comprise one or more of a size, a dimension of an input space and a dimension of a feature space of a map in the machine learning model architecture 300. The map may be an activation map, a feature map, and/or a convolutional feature map. The map may map the input space to the feature space. The map may map an input from the input space, the input having the dimension of the input space, into a feature in the feature space, having the dimension of the feature space. The mapped feature may be, e.g., an array or grid having the dimension of the feature space, filled with numbers. The map may result from an application of a convolutional filter or kernel.

An execution of the machine learning model architecture 300 may be simulated on a given target hardware. The given target hardware may comprise at least part of dedicated hardware, e.g., dedicated hardware for a specific application, such as dedicated hardware on an embedded device. The simulation may be carried out and/or implemented by a compiler. The compiler may be a neural network compiler, such as a Tensor Virtual Machine (TVM) or a Multi-Level Intermediate Representation (MLIR) compiler.

From the simulating, one or more metrics 322, 332, 342 may be obtained. One or more metrics 322, 332, 342 may describe a performance of one or more model architecture elements 310, 320, 330, 340, 350, 360. The performance of the one or more model architecture elements 310, 320, 330, 340, 350, 360 may be a performance on the given target hardware. The one or more metrics 322, 332, 342 may describe a performance of individual model architecture elements 310, 320, 330, 340, 350, 360 out of the one or more model architecture elements 310, 320, 330, 340, 350, 360. The metrics 322, 332, 342 may define a hardware efficiency of individual model architecture elements 310, 320, 330, 340, 350, 360 on the given target hardware. This way, the metrics 322, 332, 342 may quantify how efficient, or inefficient, certain individual model architecture elements 310, 320, 330, 340, 350, 360 and/or individual architectural parameters 321, 331, 341 may be, when a candidate model architecture 300 may be deployed on a given hardware. For example, in the case of considering activation maps, or feature maps, as individual model architecture elements 310, 320, 330, 340, 350, 360 for a given tensor, individual activation maps may play a major role in defining the hardware efficiency, as they may contribute heavily towards hardware efficiency, or inefficiency. When considering activation maps, it may be desirable to gear a neural architecture search towards an optimization loop using a candidate model architecture 300 having a smaller size of activation maps. It may be important in defining suitable metrics 322, 332, 342 that the metrics 322, 332, 342 may be applicable to all of the individual model architecture which may be considered, e.g., metrics of which the values are comparable, consistent, measurable and/or commensurable across the possible various kinds of individual model architecture elements 310, 320, 330, 340, 350, 360. From a qualitative aspect, the metrics 322, 332, 342 may be considered as if they should be able to map important aspects as follows. For example, the one or more metrics 322, 332, 342 may comprise a metric 322, 332, 342 based on values describing a frequency of DRAM access. If the frequency of DRAM access is more than a particular threshold for an individual model architecture element 310, 320, 330, 340, 350, 360, then that particular individual model architecture element 310, 320, 330, 340, 350, 360 may be annotated. For example, it may be annotated such that the individual model architecture element 310, 320, 330, 340, 350, 360 may have to be adjusted in order to enhance a hardware efficiency of that particular individual model architecture element 310, 320, 330, 340, 350, 360. For example, the one or more metrics 322, 332, 342 may comprise a metric 322, 332, 342 based on values describing a frequency of offloading it to the general-purpose compute. If the frequency of DRAM access goes beyond a particular threshold for an individual model architecture element 310, 320, 330, 340, 350, 360, then that particular individual model architecture element 310, 320, 330, 340, 350, 360 may be annotated. For example, it may be annotated such that the individual model architecture element 310, 320, 330, 340, 350, 360 may have to be adjusted, e.g., by substituting different operations, e.g. better operations in a certain qualitative aspect, may be substituted, in order to enhance a hardware efficiency of that particular individual model architecture element 310, 320, 330, 340, 350, 360.

Furthermore, the following metrics 322, 332, 342 may be defined and/or used.

1. *Memory access*: For example, the one or more metrics 322, 332, 342 may comprise a metric 322, 332, 342 based on values describing one or more of a Dynamic Random Access Memory (DRAM) read access and/or a DRAM write access. Such a metric 322, 332, 342 may be defined as follows:

$$m_1 = \frac{c_1 \times DRAM_{reads} + c_2 \times DRAM_{writes}}{c_1 + c_2}$$

Here, $c_1$ and $c_2$ may denote parameters. Furthermore, $DRAM_{reads}$ may represent a number of DRAM reads. Moreover, $DRAM_{writes}$ may represent a number of DRAM write access. For a given model architecture element 310, 320, 330, 340, 350, 360, e.g., an activation map, a total number of DRAM reads and DRAM writes from a DRAM, may be computed, e.g., via a neural network compiler, such as TVM and/or MLIR. DRAM accesses may inversely impact an energy consumption and/or a latency of a hardware implementation. For example, a particular activation map in a certain network layer of a model architectures may have a high impact on a resulting memory overhead.

2. *SRAM occupation:* For example, the one or more metrics 322, 332, 342 may comprise a metric 322, 332, 342 based on values describing an occupation of the Static Random Access Memory (SRAM) by individual model architecture elements 310, 320, 330, 340, 350, 360 of the machine learning model architecture 300, such as tensors. Such a metric 322, 332, 342 may be defined as follows:

$$m_2 = \sum Tensors_{concurrent}$$

Individual model architecture elements, e.g. tensors, may be concurrent, in the sense that the individual model architecture elements 310, 320, 330, 340, 350, 360 may compete among themselves to occupy the SRAM. In the case of a contention, some of the memory requirements of the individual model architecture elements 310, 320, 330, 340, 350, 360 may be offloaded to the DRAM. Therefore, this metric 322, 332, 342 may be relevant for a NAS strategy 220 in order to reduce a total number of concurrent individual model architecture elements 310, 320, 330, 340, 350, 360 at a given time.

3. *Lifetime of residual connections:* For example, the one or more model architecture elements 310, 320, 330, 340, 350, 360 may comprise a residual connection, and the one or more metrics 322, 332, 342 may comprise a metric 322, 332, 342 based on values describing one or more of a number of layers 310, 320, 330, 340, 350, 360 in the machine learning model architecture 300 the residual connection may skip and/or on a size of a memory occupied by the residual connection. Such a metric 322, 332, 342 may be defined as follows:

$$m_3 = Tensor_{hops} \times Tensor_{size}$$

Residual connections may generally be associated with a latency and with energy overheads. For example, a long residual connections may have a high impact on a resulting memory planning, which may have a causal effect on metrics such as frames per second, and/or energy consumption, which may lead to a poor hardware efficiency. The above metric may model a residual connection by taking a product of a number of hops, or a number of network layers 310, 320, 330, 340, 350, 360 which the residual connection may take, and during which the residual connection may be considered to be alive, and a size the residual connection may occupy in a memory. Such a metric 322, 332, 342 may be used within a NAS strategy 220 in order to direct the NAS in such a way to reduce a residual connection, e.g., reduce a size of the residual connection, and/or the number of hops, if this is possible.

The above three examples of metrics 322, 332, 342 may be implemented within a standard neural network compiler, such as TVM, and/or MLIR. Such a metric 322, 332, 342 may be implemented by parsing an intermediate representation of a given network 300. Such an intermediate representation in a neural network compiler may profile a given model architecture 300, and such information may be utilized by a neural architecture search algorithm in order to direct the search.

For each architectural parameter 331 of the one or more architectural parameters 321, 331, 341, one or more model architecture elements 320, 330, 340 of machine learning model architecture 300 may be identified. One or more model architecture elements 320, 330, 340 of machine learning model architecture 300 may be identified, which may be impacted by adjusting the respective architectural parameter 331. For a search space comprising one or more architectural parameters, the architectural parameter 331, which may be denoted by $a$, may be selected. Then, a set of all individual model architecture elements 320, 330, 340, such as activation maps, which may be impacted by adjusting the respective architectural parameter 331, may be identified. The set of individual model architecture elements 320, 330, 340 which may be affected by the architectural parameter 331 in this manner may be denoted by $F_a$, and the individual model architecture elements 320, 330, 340 which may be affected by the architectural parameter 331 in this manner may be denoted by $f \in F_a$. For example, the architectural parameter 321, $a$, may comprise a size and/or a number of kernels of a convolutional layer 320 in the machine learning model architecture. Adjusting a number of filters in a first convolution layer 320 may impact a size of an activation map which arises from the first convolution layer 320 to an activation layer 330, which may comprise, e.g., a ReLU activation map. But, as the activation map may comprise an element-wise operation, such as the ReLU activation map, this may also affect a size of an activation map from the activation layer 330 to a second convolution layer 340. Therefore, the first and second convolution layers 320, 340 as well as the activation layer 330 may be identified as possibly impacted by adjusting the respective architectural parameter 321 of the number of filters in the first convolution layer 320. In other words, elements 230, 220, 240 may comprise the elements $f \in F_a$. For all elements $f$ in the set $F_a$ of individual model architecture elements 320, 330, 340 which may be impacted by adjusting a respective architectural parameter 321, $a$, one or more metrics 322, 332, 342, which may be denoted by $m_f$, may be identified.

For each architectural parameter 331 of the one or more architectural parameters 321, 331, 341, a mutation score 333 may be determined. Mutation score 333 may be determined from one or more metrics 322, 332, 342. For the one or more identified model architecture elements 320, 330, 340, mutation score 333 may indicate an impact of the one or more model architecture elements 320, 330, 340 associated with the respective architectural parameter 331 on an overall performance of machine learning model architecture 300 on the given target hardware. For a respective architectural parameter 331, a same metric 322, 332, 342 describing a performance of each identified model architecture element 320, 330, 340 may be used for all of the identified model architecture elements 320, 330, 340 impacted by adjusting the respective architectural parameter. The mutation score 333 for the respective architectural parameter 331 may then be determined on the basis of a same metric 322, 332, 342 for the one or more identified model architecture elements 320, 330, 340. The mutation score 323, 333, 343 may indicate a probability that the corresponding architectural parameter 321, 331, 342 is adjusted.

Determining the mutation score 323, 333, 343 for a respective architectural parameter 321, 331, 341, *a,* may comprise determining a first mutation score, which may be denoted by $s_a^{up}$. The first mutation score may correspond to mutating, or adjusting the architectural parameter *a* such, that the machine learning model architecture 300 is adjusted to a more complex model architecture 300'. For each architectural parameter 321, 331, 341, *a,* of the one or more architectural parameters 321, 331, 341, a second mutation score may be determined. The second mutation score may be denoted by $s_a^{down}$. The second mutation score may correspond to mutating, or adjusting the architectural parameter *a* such, that the machine learning model architecture 300 is adjusted to a less complex model architecture 300'. The first and second mutation score may be determined as follows, based on the metrics $m_f$, $f \in F_a$:

$$s_a^{(up)} = \sum_{f \in F_a} m_f$$

$$s_a^{(down)} = \frac{1}{\sum_{f \in F_a} m_f}$$

This corresponds to determining the first mutation score by summing the one or more metrics $m_f$ corresponding to the elements $f \in F$. The summing may also be a weighted sum, such as a linear combination, of the one or more metrics. This also corresponds to determining the second mutation score by taking the reciprocal of the sum of the one or more metrics $m_f$ corresponding to the elements $f \in F$. The summing may also be a weighted sum, such as a linear combination, of the one or more metrics. The second mutation score may be seen as the reciprocal of the first mutation score. The second mutation score may be determined in different ways, for example, by summing the reciprocals of the one or more metrics.

Individual model architecture elements 310, 320, 330, 340, 350, 360 in the machine learning model architecture 300 may be adjusted with probabilities 324, 334, 344 indicated by the mutation scores 323, 333, 343. Individual model architecture elements 310, 320, 330, 340, 350, 360 in the machine learning model architecture 300 may be adjusted based on the adjusting of architecture parameters 321, 331, 341. Architecture parameters 321, 331, 341 may be adjusted with probabilities 324, 334, 344 indicated by the mutation scores 323, 333, 343. Adjusting the machine learning model architecture 300 may comprise, for each architectural parameter 321, 331, 341 of the one or more architectural parameters 321, 331, 341, adjusting the respective architectural parameter 321, 331, 341 with a mutation probability 324, 334, 344 based on the mutation score 323, 333, 343 for the respective architectural parameter 321, 331, 341. For each architectural parameter 321, 331, 341 of the one or more architectural parameters 321, 331, 341, a mutation probability 324, 334, 344 may be determined. Mutation probability 324, 334, 344 may be determined based on the mutation score 323, 333, 343 for the respective architectural parameter 321, 331, 341. A mutation probability 324, 334, 344 for a respective architectural parameter 321, 331, 341 may be based on, for example, a normalization over all of the mutation scores 323, 333, 343 for the one or more architectural parameters 321, 331, 341 of machine learning model architecture 300. A mutation probability 324, 334, 344 for a respective architectural parameter 321, 331, 341 may be based on, for example, one or more tuning parameters. One or more tuning parameters may be based on the one or more metrics 322, 332, 342 for the one or more model architecture elements 320, 330, 340 impacted by adjusting the respective architectural parameter 321, 331, 341. One or more tuning parameters may be independent of the one or more metrics 322, 332, 342 for the one or more model architecture elements 320, 330, 340 impacted by adjusting the respective architectural parameter 321, 331, 341.

Determining the mutation probability 324, 334, 344 for a respective architectural parameter 321, 331, 341, *a,* may comprise determining a first mutation probability, which may be denoted by $p_a^{up}$. The first mutation probability may correspond to the first mutation score, and thereby to mutating, or adjusting the architectural parameter *a* such, that the machine learning model architecture 300 is adjusted to a more complex model architecture 300'. For each architectural parameter 321, 331, 341, *a,* of the one or more architectural parameters 321, 331, 341, a second mutation probability may be determined. The second mutation probability may be denoted by $p_a^{down}$. The second mutation probability may correspond to the second mutation probability, and thereby to mutating, or adjusting the architectural parameter $a$ such, that the machine learning model architecture 300 is adjusted to a less complex model architecture 300'. The first and second mutation probabilities may be determined as follows, based on a normalization of the mutation scores corresponding to the architectural parameter $a$. The normalization may be denoted by $S$, and determined as follows:

$$S = \sum_a \left( s_a^{(up)} + s_a^{(down)} \right)$$

Then, the first and second mutation probabilities are determined as follows:

$$p_a^{(up)} = \frac{p_{fm} \cdot s_a^{(up)}}{2 \cdot S} + \frac{p_0}{2 \cdot |P|}$$

$$p_a^{(down)} = \frac{p_{fm} \cdot s_a^{(down)}}{2 \cdot S} + \frac{p_0}{2 \cdot |P|}$$

Here, $p_{fm}$ may denote a constant to tune an expected number of mutation. The expected number of mutations may be based on the one or more metrics $m_f$. Furthermore, $p_0$ may denote a constant to tune an expected number of mutations which may be independent of the one or more metrics $m_f$. The expected numbers of mutations may be required to maintain a certain level of exploration. Furthermore, $|P|$ may denote a total number of parameters $a$ in the search space. Recommended values for $p_{fm}$ and $p_0$ may be values such that $p_{fm} + p_0 = 2$. Here, a higher value for $p_{fm}$ may put a stronger emphasis on an exploitation of the search space given the one or more metrics $m_f$, and a higher value for $p_0$ may put a stronger emphasis on exploration of the search space. Typical values may comprise $p_{fm}$ and $p_0$ such that $p_{fm} \in [0.5, 1.5]$ and $p_0 = 2 - p_{fm}$. The first and second mutation probabilities $p_a^{(up)}$ and $p_a^{(down)}$ may be directly used in an evolutionary NAS flow, in order to mutate known machine learning model architectures 300, before selecting the adjusted machine learning model architectures 300' as a candidate machine learning model architecture for evaluation in the NAS flow strategy.

**Fig. 4** shows an example of a hardware-aware neural architecture search flow 400 according to an embodiment. The hardware-aware neural architecture search flow 400 may be considered as an improvement of a state-of-the-art hardware-aware neural architecture search flow 200 as shown in Figure 2.

The hardware-aware neural architecture search flow 400 may comprise a network search space 410. Network search space 410 may comprise candidate machine learning model architectures 300. Using the hardware-aware NAS flow 400, machine learning model architectures 300 may further be optimized for efficient execution on the hardware of an embedded device 110, 110' in an automated manner compared to state-of-the-art NAS flows 200, as in the NAS algorithm 420 additional, more detailed information on hardware efficiency of individual model architecture elements 310, 320, 330, 340, 350, 360 may be leveraged.

A genetic NAS search flow 420 may be considered. In the genetic NAS search flow 420, machine learning model architectures 300 may be represented as a genome, and new candidate machine learning model architectures 300' may be created via mutations and/or crossovers from the best intermediate candidate machine learning model architectures 300 known so far in the iterative NAS process. The search efficiency and/or sample efficiency may be increased by adjusting mutation probabilities such that adjustments to candidate machine learning model architectures 300 may be more likely, if the adjustments may increase a hardware efficiency of the candidate machine learning model architecture 300, and/or if the adjustments may increase a task performance without compromising on the hardware efficiency of the candidate machine learning model architecture 300. For example, in the case of activation maps as individual model architecture elements 310, 320, 330, 340, 350, 360, adjustments to the machine learning model architecture may be more likely, if the adjustments may reduce a size of activation maps with high mutation score, in order to aim at increasing the hardware efficiency, and/or if the adjustments may increase the size of activation maps with low importance score, in order to aim at increasing the task performance without compromising on the hardware efficiency.

The hardware-aware neural architecture search flow 400 may comprise the leveraging 460 of additional, detailed information on the hardware efficiency of individual model architecture elements 310, 320, 330, 340, 350, 360 of a candidate machine learning model architecture 300. The genetic neural architecture search algorithm 420 may comprise adjusting a candidate machine learning model architecture 300 on the basis on the additional, detailed information on the hardware efficiency of individual model architecture elements 310, 320, 330, 340, 350, 360 of the candidate machine learning model architecture 300.

One or more mutation scores 323, 333, 343 for the one or more architectural parameters 321, 331, 341 may be used in the genetic neural architecture search algorithm 420. An input of the genetic neural architecture search algorithm 420 may comprise the machine learning model architecture 300 and the mutation score 323, 333, 343 may indicate a probability that the corresponding architectural parameter 321, 331, 341 may be adjusted. An output of the genetic neural architecture search algorithm 420 may comprise an adjusted machine learning model architecture 300'. The adjusted machine learning model architecture 300' may be provided as output for the genetic neural architecture search algorithm 420.

Adjusting the machine learning model architecture 300 may comprise, for each architectural parameter 321, 331, 341 of the one or more architectural parameters 321, 331, 341 of the candidate machine learning model architecture 300, adjusting the respective architectural parameter 321, 331, 341 with a mutation probability 324, 334, 344 based on mutation scores 323, 333, 343 for the respective architectural parameter 321, 331, 341. The architectural parameters 321, 331, 341, identified model architecture elements 320, 330, 340, mutation scores 323, 333, 343 and mutation probabilities 324, 334, 344, may be determined and/or identified according to an embodiment.

Adjusting a respective architectural parameter 321, 331, 341 may comprise adjusting the respective architectural parameter 321, 331, 341 such that the architectural complexity of the machine learning model architecture 300 may be reduced with a first mutation probability, and/or adjusting the respective architectural parameter 321, 331, 341 such that the architectural complexity of the machine learning model architecture may be increased with a second mutation probability, wherein the first mutation probability may be based on a first mutation score and the second mutation probability may be based on the second mutation score. The first mutation score and probability and the second mutation score and probability may be determined according to an embodiment.

In the resulting hardware-aware NAS flow 400, the deployment optimization 430 may be rendered more transparent to the NAS strategy, as there may be additional information leveraged, which information is created during deployment optimization 430 for the neural architecture search 420. In particular, now metrics such as latency or energy may be modelled at a finer granularity, e.g., for individual layers or activation maps in the model architecture. By adding this more detailed information to the NAS strategy 420, an advanced and possibly accelerated search of model architectures 300 may be achieved. For example, a reduction of activation map size in the model architecture 300, 300' may have a direct impact on memory accesses, which may affect the overall latency and/or energy consumption of the resulting machine learning model. So, By leveraging 460 the additional, detailed information on hardware efficiency of individual model architecture elements 310, 320, 330, 340, 350, 360 from the deployment step 430 in the genetic neural architecture search algorithm 420, the search and sample efficiency of the resulting hardware-aware NAS flow 400 may be improved, while maintaining high task performance.

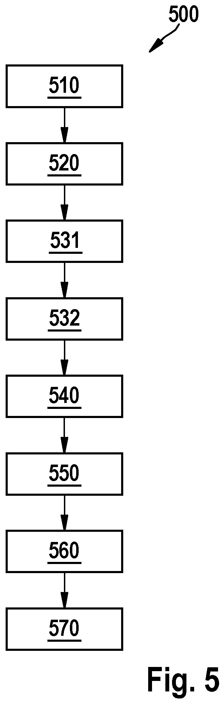

**Fig. 5** shows an example of a method 500 for providing a hardware-specific machine learning model architecture 300, 300' according to an embodiment. Method 500 may be a computer-implemented method 500.

Method 500 may comprise a step 510 of obtaining one or more architectural parameters 321, 331, 341 of a machine learning model architecture 300. The machine learning model architecture 300 may comprise one or more model architecture elements 310, 320, 330, 340, 350, 360. The one or more architectural parameters 321, 331, 341 may comprise one or more architectural parameters 321, 331, 341 of model architecture elements 320, 330, 340 in the one or more model architecture elements 310, 320, 330, 340, 350, 360.

Method 500 may comprise a step 520 of simulating an execution of the machine learning model architecture 300 on a given target hardware. From step 520, one or more metrics 322, 332, 342 may be obtained. Metrics 322, 332, 342 may describe a performance of the one or more model architecture elements 310, 320, 330, 340, 350, 360.

Method 500 may comprise a step 531 of, for each architectural parameter 331 of the one or more architectural parameters 321, 331, 341, identifying one or more model architecture elements 320, 330, 340 of the machine learning model architecture 300 impacted by adjusting the respective architectural parameter 331. Method 500 may comprise a step 532 of, for each architectural parameter 331 of the one or more architectural parameters 321, 331, 341, determining a mutation score 333 for the architectural parameter 331 from the one or more metrics 322, 332, 342 for the one or more identified model architecture elements 320, 330, 340. Mutation score 333 may indicate an impact of the one or more model architecture elements 320, 330, 340 associated with the respective architectural parameter 331 on an overall performance of the machine learning model architecture 300 on the given target hardware.

Method 500 may comprise a step 540 of using the mutation scores 323, 333, 343 for the one or more architectural parameters 321, 331, 341 in a genetic neural architecture search algorithm 420. An input of the genetic neural architecture search algorithm 420 may comprise the machine learning model architecture 300. The mutation score 323, 333, 343 may indicate a probability that the corresponding architectural parameter 321, 331, 341 is adjusted. An output of the genetic neural architecture search algorithm 420 may comprise an adjusted machine learning model architecture 300'.

Method 500 may comprise a step 550 of providing the adjusted machine learning model architecture 300' as output. Method 500 may comprise a step of providing the adjusted machine learning model architecture 300' as output for deployment on an embedded device 110, 110'. Method 500 may comprise a step 560 of performing a neural architecture search using the genetic neural architecture search algorithm 420. Method 500 may comprise a step 570 of using the adjusted machine learning model architecture 300' to initialize a further neural architecture search 420 for a further machine learning model architecture 300, based on an application task and/or another target hardware.

In an embodiment, method 500 may comprise a step of installing a machine learning model according to a machine learning model architecture 300, 300'. The machine learning model architecture 300, 300' may be an adjusted machine learning model architecture 300', The adjusted machine learning model architecture 300' may have been adjusted according to an embodiment. The machine learning model may be installed on an embedded device 110, 110', with an intended use of an efficient execution and performing of the one or more particular application tasks the embedded device 110, 110' is configured to perform. The embedded device 110, 110'may be as described in this application. As the installed machine learning model is according to an adjusted machine learning model architecture 300', the machine learning model is rendered more hardware efficient, with a maintained or improved task performance. Hereby, the embedded device 110, 110' is more suitably configured for an efficient execution and a faster, better, and/or otherwise optimal performing of the one or more particular application tasks, with an optimal energy consumption and/or usage of the limited hardware.

In an embodiment, method 500 may comprise a step of training a machine learning model. The machine learning model may be trained on training data, such as a training data set. The training data set may comprise machine learning model architectures 300, 300', for example machine learning model architectures 300 from a network search space 410. The machine learning model may further be trained on architectural parameters, model architecture elements, metrics, mutation scores and/or mutation probabilities according to an embodiment. The machine learning model may be trained according to an adjusted machine learning model architecture 300'. The adjusted machine learning model may have been adjusted according to an embodiment. The machine learning model may be trained on a device or a system, such as an embedded device 110, 110' or system 100, with an intended use of an improved inference and/or use of the machine learning model on the embedded device 110, 110' or system 100, based on an improved hardware efficiency and a maintained or improved task performance of the machine learning model, particularly for the one or more application tasks the embedded device 110, 110' or system 100 is configured to perform. The device or a system may be as described in this application.

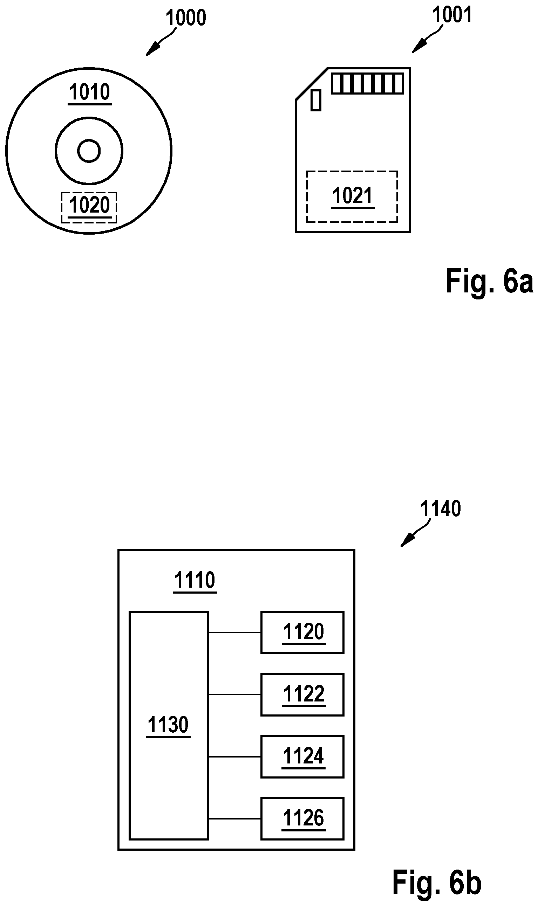

Any of the method(s) as described in this specification may be implemented on a computer as a computer implemented method, as dedicated hardware, or as a combination of both. As also illustrated in **Fig. 6a,** instructions for the computer, e.g., executable code, may be stored on a computer-readable medium 1000, 1001, e.g., in the form of a series 1020, 1021 of machine-readable physical marks and/or as a series of elements having different electrical, e.g., magnetic, or optical properties or values. The computer-readable medium 1000, 1001 may be a transitory or non-transitory medium. Examples of computer-readable mediums include memory devices, optical storage devices, integrated circuits, etc. By way of example, Fig. 6a shows an optical storage device 1000 and a memory card 1001.

**Fig. 6b** shows a processor system 1140 which may comprise or represent a system configured to perform a method as described elsewhere in this specification. The processor system may comprise one or more subsystems or components 1110. For example, a processing subsystem 1120 may be provided for executing computer program components to perform a method as described elsewhere in this specification. A memory 1122 may be provided for storing programming code, data, etc. A communication subsystem 1126, such as a network interface, may allow communication with other entities. In some examples, a dedicated integrated circuit 1124 may be provided for performing part or all of the processing related to a method as described elsewhere in this specification. The processing subsystem 1120, the memory 1122, the dedicated IC 1124 and the communication subsystem 1126 may be connected to each other via an interconnect 1130, say a bus. While system 1140 is shown as including one of each described component, the various components may be duplicated in various embodiments. For example, the processing subsystem 1120 may include multiple microprocessors that are configured to independently execute a method as described in this specification or are configured to perform steps or subroutines of a method described herein such that the multiple processors cooperate to achieve the functionality described in this specification. Further, where the system 1140 may be implemented in a cloud computing system, a cloud server and/or a compute farm, the various hardware components may belong to separate physical systems. For example, the processing subsystem 1120 may include a first processor in a first server and a second processor in a second server.

In an alternative embodiment of Fig. 6b, the processor system 1140 may represent target hardware architecture on which the selected machine learning model is deployed; e.g., target hardware on an embedded device 110, 110'. In other words, the processor system may represent a deployment target, which may perform an application task as described elsewhere in this specification. The processor system 1140 may for example be an embedded device 110, 110', and/or an embedded system 100 according to an embodiment, and/or otherwise as described in this application . The embedded device or system may comprise, for example, a sensor, which may determine measurements of the environment in the form of sensor signals, which may be given by, for example, digital images, e.g., video, radar, LiDAR, ultrasonic, motion thermal images, or audio signals. The embedded device or system may, for example, comprise a domestic or household appliance, which comprises a sensor which detects the presence of objects inside a washing machine, dishwasher, or a vehicle, which comprises a sensor which detects the presence of objects in the environment of the vehicle. An application task may comprise classifying the data from the sensor, detecting the presence of objects in the sensor data and/or performing a semantic segmentation on the data, e.g., regarding traffic signs, road surfaces, pedestrians and vehicles. Another application task may comprise determining a continuous value or multiple continuous values, e.g., perform a regression analysis, e.g., regarding a distance, a velocity, an acceleration, and/or the tracking of an item, e.g., an object, in the data. These examples of application tasks may be carried out on low-level features, such as edges or pixel attributes in the case of image data. Other application tasks may comprise detecting anomalies in technical systems, computing control signals for controlling technical systems, e.g., computer-controlled machines as robotic systems, vehicles, domestic appliances like a washing machine, power tools, manufacturing machines, personal assistants, or access control systems; or systems for conveying information, e.g., surveillance systems or medical systems as medical imaging systems.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method (500) for providing a hardware-specific machine learning model architecture, the method (500) comprising:

   - obtaining (510) one or more architectural parameters (321, 331, 341) of a machine learning model architecture (300), wherein the machine learning model architecture (300) comprises one or more model architecture elements (310, 320, 330, 340, 350, 360), and the one or more architectural parameters (321, 331, 341) comprise one or more architectural parameters (321, 331, 341) of model architecture elements (320, 330, 340) in the one or more model architecture elements (310, 320, 330, 340, 350, 360),
   - simulating (520) an execution of the machine learning model architecture (300) on a given target hardware, obtaining from the simulating (520) one or more metrics (322, 332, 342) describing a performance of the one or more model architecture elements (310, 320, 330, 340, 350, 360),
   - for each architectural parameter (331) of the one or more architectural parameters (321, 331, 341),
   - identifying (531) one or more model architecture elements (320, 330, 340) of the machine learning model architecture (300) impacted by adjusting the respective architectural parameter (331),
   - determining (532) a mutation score (333) for the architectural parameter (331) from the one or more metrics (322, 332, 342) for the one or more identified model architecture elements (320, 330, 340), the mutation score (333) indicating an impact of the one or more model architecture elements (320, 330, 340) associated with the respective architectural parameter (331) on an overall performance of the machine learning model architecture (300) on the given target hardware,
   - using (540) the mutation scores (323, 333, 343) for the one or more architectural parameters (321, 331, 341) in a genetic neural architecture search algorithm (420), wherein an input of the genetic neural architecture search algorithm (420) comprises the machine learning model architecture (300) and the mutation score (323, 333, 343) indicates a probability that the corresponding architectural parameter (321, 331, 341) is adjusted, and wherein an output of the genetic neural architecture search algorithm (420) comprises an adjusted machine learning model architecture (300'),
   - providing (550) the adjusted machine learning model architecture (300') as output.

2. A method (500) according to claim 1, wherein

   - the genetic neural architecture search algorithm (420) comprises adjusting the machine learning model architecture (300),

wherein adjusting the machine learning model architecture (300) comprises

- for each architectural parameter (321, 331, 341) of the one or more architectural parameters (321, 331, 341), adjusting the respective architectural parameter (321, 331, 341) with a mutation probability (324, 334, 344) based on the mutation score (323, 333, 343) for the respective architectural parameter (321, 331, 341).

3. A method (500) according to claim 2, wherein

- determining the mutation score (323, 333, 343) for a respective architectural parameter (321, 331, 341) comprises determining a first mutation score, and wherein the method (500) further comprises
- for each architectural parameter (321, 331, 341) of the one or more architectural parameters (321, 331, 341), determining a second mutation score,

and wherein

- adjusting a respective architectural parameter (321, 331, 341) comprises adjusting the respective architectural parameter (321, 331, 341) such that the architectural complexity of the machine learning model architecture (300) is reduced with a first mutation probability, and/or adjusting the respective architectural parameter (321, 331, 341) such that the architectural complexity of the machine learning model architecture is increased with a second mutation probability,

wherein the first mutation probability is based on the first mutation score and the second mutation probability is based on the second mutation score.

4. A method (500) according to claim 2 or 3, wherein the mutation probability (324, 334, 344) for a respective architectural parameter (321, 331, 341) is further based on

- a normalization over all of the mutation scores (323, 333, 343) for the one or more architectural parameters (321, 331, 341) of the machine learning model architecture (300),
- one or more tuning parameters, based on the one or more metrics (322, 332, 342) for the one or more model architecture elements (320, 330, 340) impacted by adjusting the respective architectural parameter (321, 331, 341), and/or
- one or more tuning parameters, independent of the one or more metrics (322, 332, 342) for the one or more model architecture elements (320, 330, 340) impacted by adjusting the respective architectural parameter (321, 331, 341).

5. A method (500) according to any of the claims 2-4, wherein

- an architectural parameter (321, 331, 341) comprises a size and/or a number of kernels of a convolutional layer (310, 330, 350) in the machine learning model architecture (300), and adjusting the respective architectural parameter (321, 331, 341) comprises reducing or increasing the size and/or the number of kernels of the convolutional layer (310, 330, 350),
- an architectural parameter (321, 331, 341) comprises one or more network weights of the machine learning model architecture (300), and adjusting the respective architectural parameter (321, 331, 341) comprises reducing or increasing one or more of the one or more network weights, and/or
- an architectural parameter (321, 331, 341) comprises one or more of a size, a dimension of an input space and a dimension of a feature space of a map in the machine learning model architecture (300), and adjusting the respective architectural parameter (321, 331, 341) comprises reducing or increasing the size, the dimension of the input space and/or the dimension of the feature space of the map.

6. A method (500) according to any of the preceding claims, wherein the one or more metrics (322, 332, 342) comprise one or more of

- a metric (322, 332, 342) based on values describing one or more of a Dynamic Random Access Memory (DRAM) read access and/or a DRAM write access;

- a metric (322, 332, 342) based on values describing an occupation of the Static Random Access Memory (SRAM) by individual model architecture elements (310, 320, 330, 340, 350, 360) of the machine learning model architecture (300);
- a metric (322, 332, 342) based on values describing one or more of a number of layers a residual connection skips and a size of a memory occupied by the residual connection;
- a metric (322, 332, 342) based on values describing a frequency of DRAM access; and
- a metric (322, 332, 342) based on values describing a frequency of offloading an individual architecture element (310, 320, 330, 340, 350, 360) to a general-purpose compute.

7. A method (500) according to any of the preceding claims, wherein the execution of the machine learning model architecture (300) on a given target hardware is simulated using a neural network compiler, such as a Tensor Virtual Machine (TVM) or a Multi-Level Intermediate Representation (MLIR).

8. A method (500) according to any of the preceding claims, wherein for a respective architectural parameter (321, 331, 341), a same metric (322, 332, 342) describing a performance of each identified model architecture element (320, 330, 340) is used for all of the identified model architecture elements (320, 330, 340) impacted by adjusting the respective architectural parameter (321, 331, 341).

9. A method (500) according to any of the preceding claims, further comprising

   - providing the adjusted machine learning model architecture (300') as output for deployment on an embedded device (110, 110').

10. A method (500) according to any of the preceding claims, wherein the one or more model architecture elements (310, 320, 330, 340, 350, 360) comprise one or more layers (310, 320, 330, 340, 350, 360), such as convolutional layers (310, 330, 350) or activation layers (320, 340), and/or one or more activation maps, such as a ReLU activation map.

11. A method (500) according to any one of the preceding claims, wherein the machine learning model architecture (300) comprises a neural network architecture (300), such as a convolutional neural network architecture (300).

12. A method (500) according to any of the preceding claims, further comprising performing a neural architecture search (560) using the genetic neural architecture search algorithm (420).

13. A method (500) according to any one of the preceding claims, further comprising using (570) the adjusted machine learning model architecture (300') to initialize a further neural architecture search (420) for a further machine learning model architecture (300), based on an application task and/or another target hardware.

14. A system (1140) comprising: one or more processors; and one or more storage devices storing instructions that, when executed by the one or more processors, cause the one or more processors to perform steps for a method (500) according to any one of the preceding claims.

15. A transitory or non-transitory computer-readable medium (1000, 1001) comprising data (1020, 1021) representing instructions, which when executed by a processor system (1140), cause the processor system (1140) to perform one or more steps of the method (500) according to any one of claims 1 to 13.

**Amended claims in accordance with Rule 137(2) EPC.**

1. A computer-implemented method (500) for providing a hardware-specific machine learning model architecture, the method (500) comprising:

   - obtaining (510) one or more architectural parameters (321, 331, 341) of a machine learning model architecture (300), wherein the machine learning model architecture (300) comprises one or more model architecture elements (310, 320, 330, 340, 350, 360), and the one or more architectural parameters (321, 331, 341) comprise one or more architectural parameters (321, 331, 341) of model architecture elements (320, 330, 340) in the one or more model architecture elements (310, 320, 330, 340, 350, 360),
   - simulating (520) an execution of the machine learning model architecture (300) on a given target hardware, obtaining from the simulating (520) one or more metrics (322, 332, 342) describing a performance, by defining a hardware efficiency, on the given target hardware of individual model architecture elements out of the one or more model architecture elements (310, 320, 330, 340, 350, 360),

- for each architectural parameter (331) of the one or more architectural parameters (321, 331, 341),
- identifying (531) one or more model architecture elements (320, 330, 340) of the machine learning model architecture (300) impacted by adjusting the respective architectural parameter (331),
- determining (532) a mutation score (333) for the architectural parameter (331) from the one or more metrics (322, 332, 342) for the one or more identified model architecture elements (320, 330, 340), the mutation score (333) indicating an impact of the one or more model architecture elements (320, 330, 340) associated with the respective architectural parameter (331) on an overall performance of the machine learning model architecture (300) on the given target hardware,
- using (540) the mutation scores (323, 333, 343) for the one or more architectural parameters (321, 331, 341) in a genetic neural architecture search algorithm (420), wherein an input of the genetic neural architecture search algorithm (420) comprises the machine learning model architecture (300) and the mutation score (323, 333, 343) indicates a probability that the corresponding architectural parameter (321, 331, 341) is adjusted, and wherein an output of the genetic neural architecture search algorithm (420) comprises an adjusted machine learning model architecture (300'),
- providing (550) the adjusted machine learning model architecture (300') as output.

2. A method (500) according to claim 1, wherein

- the genetic neural architecture search algorithm (420) comprises adjusting the machine learning model architecture (300),
wherein adjusting the machine learning model architecture (300) comprises
- for each architectural parameter (321, 331, 341) of the one or more architectural parameters (321, 331, 341), adjusting the respective architectural parameter (321, 331, 341) with a mutation probability (324, 334, 344) based on the mutation score (323, 333, 343) for the respective architectural parameter (321, 331, 341).

3. A method (500) according to claim 2, wherein

- determining the mutation score (323, 333, 343) for a respective architectural parameter (321, 331, 341) comprises determining a first mutation score,
and wherein the method (500) further comprises
- for each architectural parameter (321, 331, 341) of the one or more architectural parameters (321, 331, 341), determining a second mutation score,
and wherein
- adjusting a respective architectural parameter (321, 331, 341) comprises adjusting the respective architectural parameter (321, 331, 341) such that the architectural complexity of the machine learning model architecture (300) is reduced with a first mutation probability, and/or adjusting the respective architectural parameter (321, 331, 341) such that the architectural complexity of the machine learning model architecture is increased with a second mutation probability,
wherein the first mutation probability is based on the first mutation score and the second mutation probability is based on the second mutation score.

4. A method (500) according to claim 2 or 3, wherein the mutation probability (324, 334, 344) for a respective architectural parameter (321, 331, 341) is further based on

- a normalization over all of the mutation scores (323, 333, 343) for the one or more architectural parameters (321, 331, 341) of the machine learning model architecture (300),
- one or more tuning parameters, based on the one or more metrics (322, 332, 342) for the one or more model architecture elements (320, 330, 340) impacted by adjusting the respective architectural parameter (321, 331, 341), and/or
- one or more tuning parameters, independent of the one or more metrics (322, 332, 342) for the one or more model architecture elements (320, 330, 340) impacted by adjusting the respective architectural parameter (321, 331, 341).

5. A method (500) according to any of the claims 2-4, wherein

- an architectural parameter (321, 331, 341) comprises a size and/or a number of kernels of a convolutional layer (310, 330, 350) in the machine learning model architecture (300), and adjusting the respective architectural parameter (321, 331, 341) comprises reducing or increasing the size and/or the number of kernels of the convolutional layer (310, 330, 350),

- an architectural parameter (321, 331, 341) comprises one or more network weights of the machine learning model architecture (300), and adjusting the respective architectural parameter (321, 331, 341) comprises reducing or increasing one or more of the one or more network weights,

and/or

- an architectural parameter (321, 331, 341) comprises one or more of a size, a dimension of an input space and a dimension of a feature space of a map in the machine learning model architecture (300), and adjusting the respective architectural parameter (321, 331, 341) comprises reducing or increasing the size, the dimension of the input space and/or the dimension of the feature space of the map.

6. A method (500) according to any of the preceding claims, wherein the one or more metrics (322, 332, 342) comprise one or more of

   - a metric (322, 332, 342) based on values describing one or more of a Dynamic Random Access Memory (DRAM) read access and/or a DRAM write access;
   - a metric (322, 332, 342) based on values describing an occupation of the Static Random Access Memory (SRAM) by individual model architecture elements (310, 320, 330, 340, 350, 360) of the machine learning model architecture (300);
   - a metric (322, 332, 342) based on values describing one or more of a number of layers a residual connection skips and a size of a memory occupied by the residual connection;
   - a metric (322, 332, 342) based on values describing a frequency of DRAM access; and
   - a metric (322, 332, 342) based on values describing a frequency of offloading an individual architecture element (310, 320, 330, 340, 350, 360) to a general-purpose compute.

7. A method (500) according to any of the preceding claims, wherein the execution of the machine learning model architecture (300) on a given target hardware is simulated using a neural network compiler, such as a Tensor Virtual Machine (TVM) or a Multi-Level Intermediate Representation (MLIR).

8. A method (500) according to any of the preceding claims, wherein for a respective architectural parameter (321, 331, 341), a same metric (322, 332, 342) describing a performance, by defining a hardware efficiency, on the given target hardware, of each identified model architecture element (320, 330, 340) is used for all of the identified model architecture elements (320, 330, 340) impacted by adjusting the respective architectural parameter (321, 331, 341).

9. A method (500) according to any of the preceding claims, further comprising

   - providing the adjusted machine learning model architecture (300') as output for deployment on an embedded device (110, 110').

10. A method (500) according to any of the preceding claims, wherein the one or more model architecture elements (310, 320, 330, 340, 350, 360) comprise one or more layers (310, 320, 330, 340, 350, 360), such as convolutional layers (310, 330, 350) or activation layers (320, 340), and/or one or more activation maps, such as a ReLU activation map.

11. A method (500) according to any one of the preceding claims, wherein the machine learning model architecture (300) comprises a neural network architecture (300), such as a convolutional neural network architecture (300).

12. A method (500) according to any of the preceding claims, further comprising performing a neural architecture search (560) using the genetic neural architecture search algorithm (420).

13. A method (500) according to any one of the preceding claims, further comprising using (570) the adjusted machine learning model architecture (300') to initialize a further neural architecture search (420) for a further machine learning model architecture (300), based on an application task and/or another target hardware.

14. A system (1140) comprising: one or more processors; and one or more storage devices storing instructions that, when executed by the one or more processors, cause the one or more processors to perform steps for a method (500) according to any one of the preceding claims.

15. A transitory or non-transitory computer-readable medium (1000, 1001) comprising data (1020, 1021) representing instructions, which when executed by a processor system (1140), cause the processor system (1140) to perform one or more steps of the method (500) according to any one of claims 1 to 13.

**Fig. 1**

**Fig. 2**

Fig. 3

Fig. 4

500

510

520

531

532

540

550

560

570

Fig. 5

1000

1010

1020

1001

1021

# Fig. 6a

1140

1110

1130

1120

1122

1124

1126

# Fig. 6b

Europäisches
Patentamt

European
Patent Office

Office européen
des brevets

## EUROPEAN SEARCH REPORT

**Application Number**

EP 25 15 5253

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EDGAR LIBERIS ET AL: "muNAS: Constrained Neural Architecture Search for Microcontrollers", ARXIV.ORG, CORNELL UNIVERSITY LIBRARY, 201 OLIN LIBRARY CORNELL UNIVERSITY ITHACA, NY 14853, 8 December 2020 (2020-12-08), XP081830825, * abstract; section 3 * | 1-15 | INV. G06N3/063 G06N3/086 G06N3/0464 G06N3/0985 |
| A | CHEN WEIWEI CHENWEIWEI@ICT AC CN ET AL: "A Framework for Neural Network Architecture and Compile Co-optimization", ACM TRANSACTIONS ON EMBEDDED COMPUTING SYSTEMS, ACM, NEW YORK, NY, US, vol. 22, no. 1, 29 October 2022 (2022-10-29), pages 1-24, XP058930083, ISSN: 1539-9087, DOI: 10.1145/3533251 * section 4.1 * | 7 | |

| TECHNICAL FIELDS SEARCHED (IPC) |
|---|
| G06N |

The present search report has been drawn up for all claims

| Place of search | Date of completion of the search | Examiner |
|---|---|---|
| The Hague | 8 July 2025 | Keane, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **IQBAL et al.** *FlexiBO: A Decoupled Cost-Aware Multi-Objective Optimization Approach for Deep Neural Networks*

- **ELSKEN et al.** *Efficient Multi-objective Neural Architecture Search via Lamarckian Evolution*